# EUROPEAN PATENT SPECIFICATION

(11) **EP 4 402 105 B1**
(45) Date of publication and mention of the grant of the patent: **18.03.2026**
(21) Application number: 21799326.0
(22) Date of filing: 14.09.2021
(51) Int. Cl.: C02F 1/32, C02F 1/00, B01D 45/02, B67D 3/00

(54) **CLOSED SYSTEM HYGIENIC WATER DISPENSER**
HYGIENEWASSERSPENDER MIT GESCHLOSSENEM SYSTEM
DISTRIBUTEUR D'EAU HYGIÉNIQUE À SYSTÈME FERMÉ

(43) Date of publication of application: 24.07.2024
(73) Proprietor: Darabos, János, 4251 Hajdúsámson (HU)
(72) Inventor: Darabos, János, 4251 Hajdúsámson (HU)
(86) International application number: PCT/IB2021/058344
(87) International publication number: WO 2023/041950

(56) References cited:
- EP-A1- 1 852 131
- WO-A1-2017/208816
- JP-B2- 5 998 094
- KR-A- 20140 011 748
- US-A1- 2014 124 680
- US-A1- 2015 151 957

## Description

The patent application relates to a closed system hygienic water dispenser.

The design according to the invention allows only air that is free of pathogens to enter the tanks of the water dispenser or the water storage unit mounted on the water dispenser, thus making the system completely hygienic.

Water dispensers are widely used in the world, both in public institutions and in private homes.

The currently commonly used (non-piped) water dispensers supply/dispense water to the consumer from a water storage unit, usually a bottle.

Commonly used water dispensers work in such a way that after removing the tamper-evident seal from the commercially available cap, the plastic bottle is inverted and its filling-emptying opening is placed into the funnel of the water dispenser, a prong in the funnel pushes the inner cap of the bottle into the bottle, and water can flow freely from the bottle through the water inlet opening of the prong to the tanks of the water dispenser. With the help of gravity, water flows into an open system (cooled) cold water tank, and from there into a lower hot water tank, so the lower tank also becomes an open system tank. For dispensing water, the consumer opens the cold water or hot water dispensing tap on the front of the dispenser, and fills a glass with cold or hot water. With the help of gravity, water flows from the bottle and, according to the laws of physics, it is replaced by air ("bubbling back") due to leaks, and through the air vents of the tanks of the water dispenser. This air is the ambient air surrounding the water dispenser. If the ambient air contains pathogens, the water in the water storage unit, the bottle becomes vulnerable, and the water can get contaminated with various pathogens, e.g. bacteria and viruses in minutes.

Pathogens are not removed by emptying the given water storage unit and replacing it with another, new, pathogen-free water storage unit, as pathogens remain in the water remaining in the cold water tank, the hot water tank and the various pipes of the water dispenser, and, e.g. if lime scale is present, they can even multiply, and thus the contents of the new, originally infection-free water storage unit can get infected, and can make the consumer ill. After an infection, conventional water dispensers can be made sterile, infection-free again only by complete disinfection of the water dispenser.

There are solutions aiming to ensure that water dispensed from a water dispenser or water purifier is free of infection.

Utility model No. CN203861026 discloses a water inlet device suitable for a water dispenser. This solution can effectively prevent the contamination of water in the tank of a water dispenser by preventing water from the water storage unit flowing into and accumulated in the water inlet device, in contact with ambient air, from being mixed into the tank of the water dispenser. This aim is achieved by providing a water inlet device having a double sealing function.

A disadvantage of the above solution is that it does not provide complete protection against the contamination of water in the water tank, as it does not solve the disinfection of the internal contents of the water dispenser.

There are solutions to disinfect drinking water that use UV (ultraviolet) light inside the devices to disinfect water.

In water dispensers connected directly to the water mains, a UV lamp is placed at a specific point of the device, and the drinking water passing through that point is sterilized with UV light. In Waterlogic water dispensers, the UV lamp is placed at the water dispensing outlet of the water dispenser, thus drinking water leaving the water dispenser is disinfected directly before consumption (https://www.waterlogic.hu). In Kärcher WPD water dispensers the drinking water entering the water dispenser is subjected to UV light. In the case of this design, the complete disinfection of the water dispenser is also carried out from time to time, by washing it regularly with hot water (https://www.kaercher.com/hu/professional/vizadagolo-berendezes.html).

Chinese utility model No. CN207210163 discloses a water purifier connected to the drinking water mains, in which the disinfection of water passing through filter elements is carried out with a UV sterilization component placed in the path of the water flow, directly before entering the tank containing purified water.

Patent application No. WO 2016/022391 A1 relates to a cold water dispenser. The device comprises a modular disinfection system having a UV-transparent tube and a UV radiation generator. Water leaving the reservoir enters the UV-transparent tube, the ends of which are provided with valves that allow it to maintain a column of water in the tube while the column of water maintained in the tube is subjected to UV radiation generated by the UV radiation generator. After disinfection the water column exits the UV-transparent tube and flows to the dispensing spout for consumption. Further, relevant prior art documents are JP 5 998094 B2, WO 2017 / 208816 A1, US 2014 / 124680 A1, KR 2014 0011748 A and EP 1 852 131 A1.

In the above solutions, UV light and ozone are used to disinfect water directly.

These designs do not provide a solution for preventing the infection of water in water dispensers operating with conventional water storage units (bottles), a design that is free from adverse health effects.

An aim of the invention is to eliminate the deficiencies of the above solutions and to provide a water dispenser that ensures the sterilization of ambient air entering the water dispenser or the water storage unit, the preservation of the sterility of water inside the device, and thus the supply of infection-free water to the consumer at all times.

Another aim is to protect the environment by creating closed system hygienic water dispensers by slightly modifying the water dispensers currently in use.

The invention is based on the recognition that the original sterile condition of the water in the water storage unit can be preserved by preventing ambient air from entering the water storage unit and the tanks, the system of the water dispenser. In the case of conventional water dispensers, there are openings at the bottom of the funnel with a prong, moreover, the tanks are not hermetically sealed or have separate air vents, so that water dispensed from the tanks is replaced by ambient air that may contain various pathogens.

The set aim is achieved by sterilizing the air entering the tanks of the water dispenser, maintaining the pathogen-free condition of the water in the water storage unit, and thus preventing the development of infection in the closed system as a whole.

The set aim is achieved by providing the water dispenser with a closing unit comprising a neck portion connected hermetically to the mouth portion of the cold water tank, and an air intake pipe connected to the neck portion, the end of which is provided with a mechanical air filter, and a section of the air intake pipe contains a light tube housing including a light tube emitting non-ozone producing ultraviolet (UV) light, so that air passing through the air intake pipe is exposed to UV light. In this case, the UV light has a bactericidal effect. Thus, the air flowing in the air intake pipe is clean, infection-free and health-friendly and, when a bottle is mounted on the water dispenser, sterile air enters the bottle and the tanks.

The invention thus relates to a closed system hygienic water dispenser, wherein the housing of the water dispenser comprises a cold water tank and a hot water tank in a closed system.

A cold water draining pipe leading out from the lower part of the cold water tank branches into two parts, the branching off pipe is a cold water dispensing pipe, the end of which is provided with a cold water dispensing tap. The other, straight branch is used for draining disinfectant/washing liquid from the cold water tank and removing it from the water dispenser by opening a cold water draining tap.

There is a filling pipe starting inside the cold water tank and leading out from the lower part of the cold water tank, which is connected directly to the bottom of the hot water tank, or to a hot water draining pipe leading out from the lower part of the hot water tank, and the end of the hot water, disinfectant/washing liquid draining pipe is provided with a hot water draining tap. It is used for draining disinfectant/washing liquid from the hot water tank and removing it from the water dispenser.

A top portion of the housing, that is the open, hollow part in the middle of the top portion is closed by a closing unit. The closing unit comprises: a rim, a protruding portion, a neck portion, a flange and a draining pipe. The neck portion, the lower part of which is provided with a flange, branches off from the rim, and the protruding portion also starts from the rim. The protruding portion contains a draining pipe, a section of which is inside the protruding portion, then passes through the bottom thereof and continues in the cold water tank. The draining pipe has a closed upper end, and a water inlet opening is formed below the closed end. The function of the section of the draining pipe inside the protruding portion, provided with a water inlet opening, is identical to the function of the prong of the funnel of a conventionally designed water dispenser.

The closing unit is preferably formed in continuation, and the cold water tank is connected to the flange of the closing unit in a tightly sealed manner, hermetically.

An air intake pipe is connected to the neck portion of the closing unit, a section of the air intake pipe contains a light tube housing, the light tube housing includes a UV light tube, and the end of the air intake pipe is provided with a mechanical air filter. The function of the mechanical air filter is to clean the incoming air from mechanical contaminants.

The UV light tube is preferably a germicidal lamp emitting at a wavelength of 253.7 nm.

The components of the water dispenser can be made of metal or plastic of a quality that meets food hygiene requirements.

The water dispenser according to the invention is provided with commonly used cooling and heating units, the tanks are provided with thermal insulation.

The heating-cooling units in the housing are of commonly used designs, the heating-cooling coils are located around the tanks, or inside the tanks.

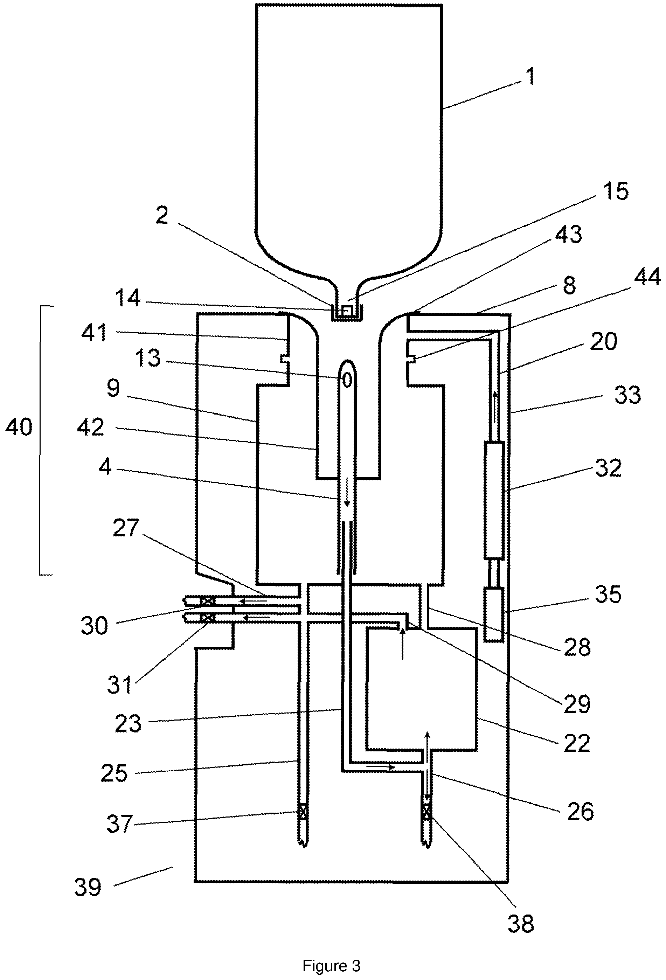

A preferred embodiment is shown in detail in Figure 3, where the flange portion of the closing unit is connected to the cold water tank in a releasable manner, preferably with sleeves.

In a further preferred embodiment the cold water tank is connected to the flange of the closing unit in an unreleasable manner, then the closing unit is formed in continuation of the cold water tank.

A water dispenser of a conventional design with a commonly used water storage unit and the solution according to the invention are described in detail with reference to the following figures, without the invention being limited to the embodiment shown:
Figure 1: shows a cross-sectional view of a water dispenser of a conventional design (not according to the invention);
Figure 2: shows a cross-sectional view of a water dispenser of another conventional design (not according to the invention);
Figure 3: shows a cross-sectional view of the water dispenser according to the invention.

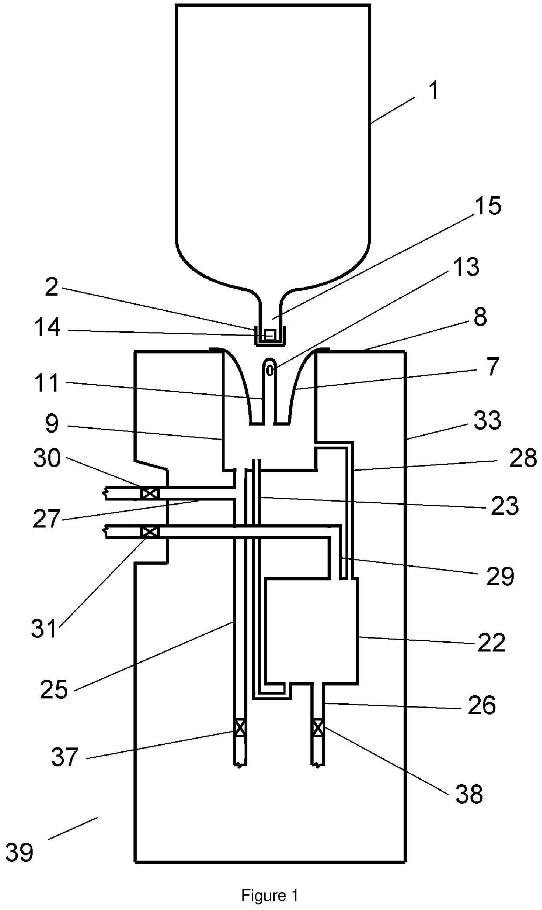

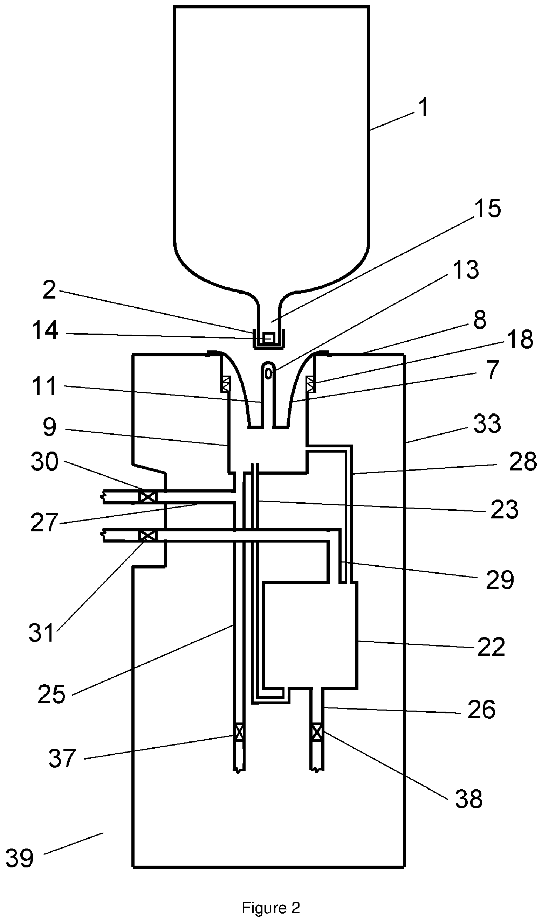

Figures 1 and 2 show commonly used water dispensers 39 of conventional designs.

Figure 1 shows a water dispenser 39 of a conventional design with two water tanks and a commonly used water storage unit, a bottle 1.

A funnel 7 protrudes through the opening of a top portion 8 of the housing 33 of the water dispenser 39, which has a prong 11 provided with a water inlet opening 13. There is a cold water tank 9 below the funnel 7. The upper part of the cylindrical shell of the cold water tank 9 is freely connected at the connection of the funnel 7 and the top portion 8, so at this point ambient air can enter the cold water tank 9.

A filling pipe 23 protruding into the cold water tank 9 passes through the lower part thereof and is connected to the lower part of a hot water tank 22, the hot water tank 22 is filled through this filling pipe 23.

A hot water dispensing pipe 29 provided with a hot water dispensing tap 31 leads out from the upper part of the hot water tank 22, through which hot water is dispensed.

A hot water air vent pipe 28 starts from the hot water tank 22 and leads into the cold water tank 9.

A hot water draining pipe 26 leads out from the lower part of the hot water tank 22 (which can also be used for draining washing/disinfectant liquid), the end of which is provided with a hot water draining tap 38.

A draining pipe 25 leads out from the lower part of the cold water tank 9. The upper part of the draining pipe 25 branches into two parts, the branching off pipe is a cold water dispensing pipe 27 provided with a cold water dispensing tap 30. The other branch of the draining pipe 25, leading out from the lower part of the housing 33, is provided with a cold water draining tap 37, and can be used for disinfection, maintenance.

The water dispenser 39 comprises commonly used cooling and heating units, which are not shown.

Commercially available water storage units, bottles 1, the filling-emptying opening 15 of which is covered by a cap 2 containing a plug 14, fit into the upper part of conventional water dispensers 39, when the bottle 1 is mounted on the water dispenser 39, the plug 14 is pushed into the bottle 1 by a prong 11, and the water flows into the cold water tank 9 through the water inlet opening 13 of the funnel 7.

The water dispenser 39 of a conventional design shown in Figure 2 differs from the embodiment shown in Figure 1 in that the shell of the cold water tank 9 is connected to the inner rim of the funnel 7 by a sealing lip ring 18, but this type of sealing cannot prevent pathogens from entering, since the cold water tank 9 has air vents at the top portion 8.

Figure 3 shows the closed system hygienic water dispenser 39 according to the invention. The design of the bottle 1 is the same as shown in Figures 1 and 2.

There is a cold water tank 9 in the upper part of the housing 33 of the water dispenser 39, and there is a hot water tank 22 below it. A cold water draining pipe 25 leads out from the lower part of the cold water tank 9, the end of which is provided with a cold water draining tap 37 for draining washing-disinfectant liquid. The upper part of the cold water draining pipe 25 leading out from the cold water tank 9 branches into two parts, the branching off pipe is a cold water dispensing pipe 27 provided with a cold water dispensing tap 30.

There is a filling pipe 23 starting inside the cold water tank 9 and leading out from the lower part of the cold water tank 9, which is connected to a hot water draining pipe 26 leading out from the lower part of the hot water tank 22. The hot water tank 22 is filled through the filling pipe 23 based on the principle of communicating vessels. The hot water draining pipe 26, the end of which is provided with a hot water draining tap 38, is used for draining washing-disinfectant liquid.

A hot water dispensing pipe 29 provided with a hot water dispensing tap 31, as well as a hot water air vent pipe 28 connected to the lower part of the cold water tank 9 lead out from the upper part of the hot water tank 22.

A rim 43 of a closing unit 40 fits on the top portion 8.

The closing unit 40 comprises: a rim 43, a protruding portion 42, a neck portion 41, a flange 44 and a draining pipe 4. Both the protruding portion 42 and the neck portion 41 branch off from, are formed in continuation of the rim 43, the lower part of the neck portion 41 is provided with a flange 44, to which the upper part of the cold water tank 9 is connected in a tightly sealed manner, e.g. with sleeves (not shown). A section of the draining pipe 4 is inside the protruding portion 42, then passes through the bottom of the protruding portion 42 and continues in the cold water tank 9, but does not reach the bottom of the cold water tank 9, and the draining pipe 4 covers a significant section, 60-90% of the filling pipe 23 in the cold water tank 9. The diameter of the draining pipe 4 is smaller than the diameter of the filling-emptying opening 15 of the bottle 1, but larger than the diameter of the filling pipe 23.

A water inlet opening 13 is formed below the closed upper end of the draining pipe 4.

An air intake pipe 20 is connected to the neck portion 41, a section of the air intake pipe 20 contains a light tube housing 32, which includes a UV light tube, and the end of the air intake pipe 20 is provided with a mechanical air filter 35.

The arrows in the figure show the direction of the flow of water, and in the air intake pipe 20 the flow of air.

Prior to mounting the bottle 1 on the water dispenser 39, the cold water dispensing tap 30, the hot water dispensing tap 31, the cold water draining tap 37 and the hot water draining tap 38 are in the closed position. After removing the tamper-evident seal from the cap 2, the bottle 1 is inverted and the filling-emptying opening 15 provided with a plug 14 is placed into the opening of the top portion 8 of the water dispenser 39, then the upper closed end of the draining pipe 4 pushes the plug 14 into the bottle 1, and the bottle 1 rests on the top portion 8 of the water dispenser 39. Water flows from the bottle 1 through the water inlet opening 13 of the draining pipe 4 into the cold water tank 9. As soon as the water level in the cold water tank 9 reaches the upper end of the filling pipe 23, water flows through the filling pipe 23 into the hot water tank 22, from where air displaced by the incoming water flows through the hot water air vent pipe 28 into the cold water tank 9.

When the hot water tank 22 is filled, the flow of water from the bottle 1 stops. It restarts only when the cold water dispensing tap 30 or the hot water dispensing tap 31 is opened, then sterile, disinfected air flows in through the air intake pipe 20, passing through the mechanical air filter 35 and the light tube housing 32, to replace the dispensed water.

During filling, disinfected air flows into the bottle 1 to replace the water flowing out therefrom. Air enters the air intake pipe 20 through the mechanical air filter 35, then passes through the light tube housing 32, where it is exposed to UV light and becomes sterile, and the disinfected air flows into the cold water tank 9. As soon as the filling of the cold water tank 9 is completed, the flow of air stops.

Cold water can be dispensed from the cold water tank 9 through the cold water dispensing tap 30, while hot water can be dispensed from the hot water tank 22 through the hot water dispensing tap 31. When the cold water dispensing tap 30 or the hot water dispensing tap 31 is opened, an amount of water corresponding to the dispensed cold or hot water necessarily flows from the bottle 1 into the cold water tank 9 or the hot water tank 22. Disinfected air flows into the bottle 1 through the air intake pipe 20 to replace the water flowing out therefrom.

During the maintenance of the water dispenser 39, the system can be emptied by draining water from the cold water tank 9 through the cold water draining tap 37, and from the hot water tank 22 through the hot water draining tap 38.

A further advantage of the invention is that water dispensers of conventional designs can be modified in a practical, cost-effective, environmentally friendly manner to a closed system hygienic water dispenser according to the invention by replacing the conventional funnel and cold water tank.

## Claims

1. A closed system hygienic water dispenser (39) comprising a cold water tank (9), below the cold water tank (9) is a hot water tank (22), in a housing (33) having a top portion (8), a cold water draining pipe (25) leads out from the lower part of the cold water tank (9), the end of which is provided with a cold water draining tap (37),
the upper part of the cold water draining pipe (25) branches into two parts, the branching off pipe is a cold water dispensing pipe (27) provided with a cold water dispensing tap (30),
there is a filling pipe (23) starting inside the cold water tank (9) and leading out from the lower part of the cold water tank (9), which is connected to a hot water draining pipe (26) leading out from the hot water tank (22), the end of the hot water draining pipe (26) is provided with a hot water draining tap (38), a hot water dispensing pipe (29) provided with a hot water dispensing tap (31) and a hot water air vent pipe (28) start from the upper part of the hot water tank (22), the hot water air vent pipe (28) leads into the lower part of the cold water tank (9),
the water dispenser further comprises a light tube housing (32) and a mechanical air filter (35),
the opening of the top portion (8) is covered by a closing unit (40), the closing unit (40) has a rim (43) that rests on the top portion (8), and a protruding portion (42) branches off from the rim (43), and the protruding portion (42) includes a draining pipe (4) with a closed upper end, provided with a water inlet opening (13),
**characterized in that**
the draining pipe (4) passes through the bottom of the protruding portion (42) and covers 60-90% of the filling pipe (23) in the cold water tank (9),
furthermore, a neck portion (41) of the closing unit (40) also branches off from the rim (43), the lower part of which is provided with a flange (44), the cold water tank (9) is connected to the flange (44) hermetically, furthermore, an air intake pipe (20) is connected to the neck portion (41), the air intake pipe (20) contains the light tube housing (32), the light tube housing (32) includes a UV light tube, and the end of the air intake pipe (20) is provided with the mechanical air filter (35).

2. The water dispenser (39) according to claim 1, **characterized in that** the cold water tank (9) is connected to the flange (44) in a releasable manner.

3. The water dispenser (39) according to claim 2, **characterized in that** the cold water tank (9) is connected to the flange (44) with sleeves.

4. The water dispenser (39) according to claim 1, **characterized in that** the cold water tank (9) is connected to the flange (44) in an unreleasable manner.

5. The water dispenser (39) according to claim 1, **characterized in that** the light tube housing (32) includes an ozone-free UV light tube.

## Patentansprüche

1. Ein hygienischer Wasserspender (39) mit geschlossenem System, bestehend aus einem Kaltwassertank (9), unterhalb des Kaltwassertanks (9) befindet sich ein Heißwassertank (22), in einem Gehäuse (33) mit einem oberen Teil (8), ein Kaltwasserablaufrohr (25) führt aus dem unteren Teil des Kaltwassertanks (9) heraus, dessen Ende mit einem Kaltwasserablasshahn (37) versehen ist, wobei sich der obere Teil des Kaltwasserablaufrohrs (25) in zwei Teile verzweigt und das abzweigende Rohr ein Kaltwasserauslassrohr (27) ist, das mit einem Kaltwasserauslasshahn (30) versehen ist. Es gibt ein Füllrohr (23), das im Inneren des Kaltwassertanks (9) beginnt und aus dem unteren Teil des Kaltwassertanks (9) herausführt, das mit einem Warmwasserablaufrohr (26) verbunden ist und aus dem Warmwassertank (22) herausführt. Das Ende des Warmwasserablaufrohrs (26) ist mit einem Warmwasserablaufhahn (38) versehen. Ein Heißwasserauslassrohr (29) mit einem Heißwasserauslasshahn (31) und ein Heißwasserentlüftungsrohr (28) starten im oberen Teil des Heißwassertanks (22), das Heißwasserentlüftungsrohr (28) führt in den unteren Teil des Kaltwassertanks (9). Der Wasserspender umfasst ferner ein Leuchtrohrgehäuse (32) und einen mechanischen Luftfilter (35), die Öffnung des oberen Teils (8) ist durch eine Verschlusseinheit (40) abgedeckt, die Verschlusseinheit (40) hat einen Rand (43), der auf dem oberen Teil (8) aufliegt, und ein vorstehender Teil (42) zweigt vom Rand (43) ab, und der vorstehende Teil (42) umfasst ein Abflussrohr (4) mit einem geschlossenen oberen Ende, das mit einer Wassereinlassöffnung (13) versehen ist, das **dadurch gekennzeichnet ist, dass** das Abflussrohr (4) durch den Boden des vorstehenden Teils (42) verläuft und 60-90 % des Füllrohrs (23) im Kaltwassertank (9) abdeckt, ferner ein Halsabschnitt (41) der Verschlusseinheit (40) ebenfalls vom Rand (43) abzweigt, dessen unterer Teil mit einem Flansch (44) versehen ist, der Kaltwassertank (9) hermetisch mit dem Flansch (44) verbunden ist, ferner ein Lufteinlassrohr (20) mit dem Halsabschnitt (41) verbunden ist, das Lufteinlassrohr (20) das Leuchtstoffröhrengehäuse (32) enthält, das Leuchtstoffröhrengehäuse (32) eine UV-Leuchtstoffröhre umfasst und das Ende des Lufteinlassrohrs (20) mit dem mechanischen Luftfilter (35) versehen ist.

2. Der Wasserspender (39) nach Anforderung 1 ist **dadurch gekennzeichnet, dass** der Kaltwassertank (9) lösbar mit dem Flansch (44) verbunden ist.

3. Der Wasserspender (39) nach Anforderung 2 ist **dadurch gekennzeichnet, dass** der Kaltwassertank (9) mit Hülsen mit dem Flansch (44) verbunden ist.

4. Der Wasserspender (39) nach Anforderung 1 ist **dadurch gekennzeichnet, dass** der Kaltwassertank (9) unlösbar mit dem Flansch (44) verbunden ist.

5. Der Wasserspender (39) nach Anforderung 1 ist **dadurch gekennzeichnet, dass** das Leuchtstoffröhrengehäuse (32) eine ozonfreie UV-Leuchtstoffröhre enthält.

## Revendications

1. Un distributeur d'eau hygiénique à système fermé (39) comprenant un réservoir d'eau froide (9), sous lequel se trouve un réservoir d'eau chaude (22), logé dans un boîtier (33) muni d'une partie supérieure (8). Un tuyau d'évacuation d'eau froide (25) sort de la partie inférieure du réservoir d'eau froide (9) et son extrémité est équipée d'un robinet de vidange d'eau froide (37). La partie supérieure du tuyau d'évacuation d'eau froide (25) se divise en deux : le tuyau de distribution d'eau froide (27) est équipé d'un robinet de distribution d'eau froide (30), un tuyau de remplissage (23) partant de l'intérieur du réservoir d'eau froide (9) et sortant de sa partie inférieure. Ce dernier est raccordé à un tuyau d'évacuation d'eau chaude (26) sortant du réservoir d'eau chaude (22) et dont l'extrémité est équipée d'un robinet de vidange d'eau chaude (38), ainsi qu'à un tuyau de distribution d'eau chaude (29) équipé d'un robinet de distribution d'eau chaude (31). Un tuyau d'évacuation d'air chaud (28) part de la partie supérieure du réservoir d'eau chaude (22) et débouche dans la partie inférieure du réservoir d'eau froide (9). Le distributeur d'eau comprend également un boîtier de tube lumineux (32) et un filtre à air mécanique (35). L'ouverture de la partie supérieure (8) est obturée par un dispositif de fermeture (40). Ce dispositif (40) est muni d'un rebord (43) reposant sur la partie supérieure (8), et d'une partie saillante (42) partant du rebord (43). Cette partie saillante (42) comprend un tuyau d'évacuation (4) à extrémité supérieure fermée, muni d'un orifice d'arrivée d'eau (13).
**caractérisé en ce que**
le tuyau d'évacuation (4) passe par le bas de la partie saillante (42) et
recouvre 60 à 90 % du tuyau de remplissage (23) dans le réservoir d'eau froide (9), en outre, une partie de col (41) de l'unité de fermeture (40) se ramifie également à partir du bord (43), dont la partie inférieure est munie d'une bride (44), le réservoir d'eau froide (9) est connecté hermétiquement à la bride (44), en outre, un tuyau d'admission d'air (20) est connecté à la partie de col (41), le tuyau d'admission d'air (20) contient le boîtier du tube lumineux (32), le boîtier du tube lumineux (32) comprend un tube lumineux UV, et l'extrémité du tuyau d'admission d'air (20) est munie du filtre à air mécanique (35).

2. Le distributeur d'eau (39) selon la revendication 1, **caractérisé en ce que** le réservoir d'eau froide (9) est relié à la bride (44) de manière amovible.

3. Le distributeur d'eau (39) selon la revendication 2, **caractérisé en ce que** le réservoir d'eau froide (9) est relié à la bride (44) par des manchons.

4. Le distributeur d'eau (39) selon la revendication 1, **caractérisé en ce que** le réservoir d'eau froide (9) est relié à la bride (44) de manière non amovible.

5. Le distributeur d'eau (39) selon la revendication 1, **caractérisé en ce que** le boîtier du tube lumineux (32) comprend un tube lumineux UV sans ozone.
